(19) Europäisches Patentamt
European Patent Office
Office européen des brevets

(11) Veröffentlichungsnummer: **0 374 249 A1**

(12) # EUROPÄISCHE PATENTANMELDUNG veröffentlicht nach Art. 158 Abs. 3 EPÜ

(21) Anmeldenummer: **88905463.1**

(51) Int. Cl.5: **A01N 37/30**

(22) Anmeldetag: **17.03.88**

(86) Internationale Anmeldenummer:
**PCT/SU88/00054**

(87) Internationale Veröffentlichungsnummer:
**WO 89/08398 (21.09.89 89/23)**

(43) Veröffentlichungstag der Anmeldung:
**27.06.90 Patentblatt 90/26**

(84) Benannte Vertragsstaaten:
**CH DE FR GB IT LI**

(71) Anmelder: **VSESOJUZNY NAUCHNO-ISSLEDOVATELSKY INSTITUT SELSKOKHOZAISTVENNOI BIOTEKHNOLOGII VSESOJUZNOI AKADEMII SELSKOKHOZYAISTVENNYKH NAUK IMENI V.I. LENINA**
**ul. Pskovskaya 12-4 Moscow, 127253(SU)**

Anmelder: **INSTITUT ELEMENTOORGANICHESKIKH SOEDINENY IMENI A.N. NESMEY ANOVA AKADEMII NAUK SSSR**
**ul. Vavilova, 28**
**Moscow, 117813(SU)**

Anmelder: **VSESOJUZNY NAUCHNO-ISSLEDOVATELSKY INSTITUT RASTENIEVODSTA IMENI N.I. VAVILOVA VSESOJUZNOI AKADEMII SELKOKHOZYAISTVENNYKH NAUK IMENI V.I. LENINA**
**ul. gertsena, 44 Leningrad, 190000(SU)**

(72) Erfinder: **FEDIN, Marat Alexandrovich**
**ul. Dm.Ulyanova, 24-158**
**Moscow, 107078(SU)**
Erfinder: **KUZNETSOVA, Tatyana Alexandrovna**
**Khoroshevskoe shosse, 36b-62**
**Moscow, 123007(SU)**
Erfinder: **SAVCHUK, Valentin A. Opytnaya stantsia VIR**
**Globinsky raion**
**Poltavskaya obl. selo Ustimovka, 315967(SU)**
Erfinder: **KABACHNIK, Martin Izrailevich**
**ul. Gubkina, 4-11**
**Moscow, 117333(SU)**
Erfinder: **GODOVIKOV, Nikolai Nikolaevich**
**pr. Leninsky, 69-27**
**Moscow, 117290(SU)**
Erfinder: **BREGADZE, Vladimir Iosifovich**
**ul. Ordzhonikidze, 14-96**
**Moscow, 117071(SU)**
Erfinder: **KAMPEL, Vladimir Tsvievich**
**ul. Leskova, 22-55**
**Moscow, 127549(SU)**
Erfinder: **GYSKA, Mikhail Nikolaevich (deceased)**

**(SU)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **VERFAHREN ZUR STERILISATION VON PFLANZLICHEN POLLEN.**

(57) Das Verfahren zur Sterilisation der Staubbeutel von Pflanzen sieht die Behandlung von Pflanzen mit einem Sterilisationsmittel in Kombination mit einem Verdünner in der fünften und/oder sechsten Periode

EP 0 374 249 A1

der Organogenese vor. Als Sterilisationsmittel dienen erfindungsgemäss N-substituierte Maleaminsäuren der allgemeinen Formel

$RNHCOCH = CHCO_2H$, worin

r $(CH_3)_2NCH_2CH_2$-; $(CH_3)_2NCH_2CH_2CH_2$-; $C_2H_5$-;

$HOC_2H_4$-; $NH_2CO$-; bedeutet.

EPAA-38405.4

# VERFAHREN ZUR STERILISATION DER STAUBBEUTEL VON PFLANZEN

## Anwendungsgebiet

Die vorliegende Erfindung bezieht sich auf die Biologie und Landwirtschaft, insbesondere auf ein Verfahren zur Sterilisation der Staubbeutel von Pflanzen, welches in der Selektion und im Samenbau zur Verwendung kommt.

## Zugrundeliegender Stand der Technik

Heute wird in der Welt die Aufgabe, die Landwirtschaft zu intensivieren, insbesondere die Ertragsfähigkeit von Getreide-, Futter-, Gemüse- und technischen Kulturen durch breite Verwendung von Hybriden der ersten Generation zu steigern, gelöst. Wegen ihrer Hybridkraft unterscheiden sich die Hybride von den Elternformen in einer höheren Leistung (um 25 bis 30%) und einer besseren Produktqualät. Es besteht ein Verfahren zur Erzeugung von neuen Hybriden, welches auf einem System zytoplasmatische Pollensterilität - Restorer der Fertilität beruht. Diesem Verfahren liegt eine fortwährende (innerhalb von 12 bis 14 Jahren) und komplizierte Selektionsarbeit zugrunde, die die Entwicklung von sterilen Analoga, Fixatoren der Sterilität und Restorern der Fertilität umfasst. Besonders aussichtsreich sind Verfahren, die auf der Sterilisation der Staubbeutel von Pflanzen mit chemischen Sterilisationsmittels (Gametoziden) basieren. Die Verwendung von Gametoziden ist bedeutend wirtschaftlicher als die des Systems "zytoplasmatische Pollensterilität", weil die Notwendigkeit entfällt, solche Formen wie steriles Analogon, Analoga für die Fixierung der Sterilität bei mütterlichen Formen und für die Restauration der Fertilität bei väterlichen Formen zu erzeugen. Man kann praktisch die Samen von Hybriden der ersten Generation sowohl im Laufe der Selektionsforschung von Ausgangsformen als auch bei der Organisation ihrer technischen Herstellung gewinnen.

Zur Zeit sind etwa 200 Verbindungen gefunden, welche eine gametozide Aktivität besitzen und ihrer chemischen Struktur nach zu verschiedenen Klassen chemischer Verbindungen behören. Gametozide müssen die volle Pollensterilität bei behandelten Pflanzen unter Erhaltung der Lebensfähigkeit von Eizellen bewirken und eine ausreichend hohe Fähigkeit (wünschenswert - mindestens 70% der Kontrolle), den Fruchtknoten unter freier Bestäubung zu bilden, sicherzustellen. Die Werte ihrer Phytotoxizität und Toxizität für Warmblüter müssen minimal sein.

Bekannt sind Verfahren zur Sterilisation der Staubbeutel von Getreidekulturen (L.Dzh. Nikell. Regulatory rosta rasteny. Primenenie v selskom khozyaistve. Moskva, izdatelstvo "Kolos", 1984, S. 28-31; SU, A 906457. L.J.Nikell. Wachstumsregulatoren von Pflanzen. Anwendung in der Landwirtschaft. Moskau, Verlag "Kolos", 1984. S. 28-31), welche in der Behandlung von Pflanzen mit Sterilisationsmitteln wie 2-Chloräthylphosphonsäure (Ethrel), Maleinsäurehydrazid, Di-(polyfluoralkyl)-phosphorsäuren und ihre Salze u.a. bestehen.

Die Behandlung der Pflanzen mit heimischen Sterilisationsmitteln erfolgt in der V. und VI. Periode der Organogenese (nach F.M.Kupermann).

In der V. Periode der Organogenese setzen die Prozesse der Bildung und der Differenzierung von Blüten ein. Gegen Ende dieser Periode entstehen Neubildungen, sporogene Archesporgewebe. Während dieser Periode kommt es zur Anlegung von Staubblättern, Stempel und Blütenhülle. In der V. Periode tritt die Differenzierung der Höckers von Staubblättern in Staubfaden und Stempel in Erscheinung. Die VI. Periode ist durch Ablauf der Prozesse der Blütenbildung (Mikro- und Makrosporogenese) gekennzeichnet. In dieser Periode werden gesonderte einkernige Pollenkörner gebildet (F. M. Kupermann. Morfofiziologiya rasteny. Moskva, izdatelstvo "Vysshaya shkola", 1973, S. 30-36. Morphophysiologie von Pflanzen. Moskau, Verlag "Vysschaya Shkola", 1973, S. 30-36).

Bekannt ist weiter ein Verfahren zur Sterilisation der Staubbeutel von Graspflanzen (GB, A, 1567153), das

darin besteht, dass man die Behandlung von Graspflanzen mit einem Sterilisationsmittel in der Periode durchführt, die zwischen Auftreten des zweiten Stengelglieds und Ährenschieben liegt. Als Sterilisationsmittel benutzt man heterozyklische Verbindungen, deren Hauptvertreter 2-Karboxy-3,4-methanpyrrolidin oder 2-Methoxykarbonyl-3,4--methanpyrrolidin sind. Die angegebenen Verbindungen werden in Kombination mit Verdünnungsmitteln und oberflächenaktiven Stoffen eingesetzt.

## Offenbarung der Erfindung

Der Erfindung liegt die Aufgabe zugrunde, durch die Wahl von Sterilisationsmitteln ein Verfahren zu entwickeln, welches es möglich macht, dieses zur Sterilisation der Staubbeutel eines breiten Spektrums von Kulturen mit hohem Sterilisationsgrad unter Erhaltung der hohen Fähigkeit von Samen, Fruchtansätze bei freier Bestäubung zu bilden, zu verwenden.

Die Aufgabe wird dadurch gelöst, dass im vorgeschlagenen Verfahren zur Sterilisation der Staubbeutel von Pflanzen durch ihre Behandlung mit einem Sterilisationsmittel in Verbindung mit einem Verdünner in der fünften und/oder sechsten Periode der Organogenese erfindungsgemäss als Sterilisationsmittel N-substituierte Maleaminsäuren der allgemeinen Formel dienen

$RNHCOCH = CHCO_2H$,

worin R $(CH_3)_2NCH_2CH_2-$; $(CH_3)_2NCH_2CH_2CH_2-$; $C_2H_5-$; $HOC_2H_4-$; $NH_2CO-$ bedeutet.

Das Sterilisationsmittel kann in Kombination mit einem beliebigen bekannten und dazu geeigneten Verdünner verwendet werden. Es ist zweckmässigerweise in Verbindung mit Wasser als eine 0,1- bis 2%-ige wässrige Emulsion zu ver verwenden. Als Pflanzen, die mit dem angegebenen Sterilisationsmittel behandelt werden, dienen bevorzugt Graspflanzen oder Sonnenblumen

Das erfindungsgemässe Verfahren ermöglicht, die Pollensterilität von Pflanzen (98-100%) zu erzielen und einen

hohen Prozentsatz der Fähigkeit zur Samenbildung (über 70%) zu erhalten. Zwecks Erzielung des hohen Sterilisationsgrades von Sbaubbeuteln unter ungünstigen Klimabedingungen wird die Behandlung von Pflanzen mit dem Sterilisationsmittel in der fünften und/oder sechsten Periode der Organogenese (nach Kupermann) wiederholt.

Beste Ausführungsvariente der Erfindung

Das erfindungsgemässe Verfahren wird wie folgt durchgeführt.

Pflanzen wie z.B. Winter- und Sommerweisen, diploider und tetraploider Roggen, Tritikale, Hirse, Sonnenblume, Graspflanzen, werden mit einem Sterilisationsmittel behandelt, wobei als solches N-substituierte Maleaminsäuren verwendet werden.

N-substituierte Maleaminsäuren können in Verbindung mit beliebigen geeigneten Verdünnern verwendet werden, als Verdünner ist Wasser zweckmässigerweise zu benutzen. Dabei ist eine 0,1- bis 2%ige wässrige Emulsion der angegebenen Verbindungen vorteilhaft zu verwenden.

Man kann den gebrauchsfertigen Lösungen beliebige geeignete oberflächenaktive Stoffe wunschgemäss zusetzen. Beim Aufbringen auf die Pflanzen sind gewöhnlich den gebrauchsfertigen Lösungen beliebige bekannte Hilfszusätze wie Nutzmittel, Dispergiermittel und Adhäsionsmittel zweckmässigerweise hinzuzufügen.

Das Sterilisationsmittel lässt sich auf Pflanzen nach verschiedenen Behandlungsverfahren wie Flüssigkeitszerstäubung und Luftzerstäubung (Aerosole) aufbringen. Die Behandlung von Pflanzen mit dem Sterilisationsmittel erfolgt in der fünften und/oder sechsten Periode der Organogenese (nach Kupermann). Die Dosis des Sterilisationsmittels hängt von der Natur der Verbindung, von zu behandelnder Kultur, Behandlungsperiode und natürlichen Klimafaktoren ab. Um den hohen Sterilisationseffekt unter ungünstigen Klimabedingungen sicherzustellen, ist es zweckmässig, eine wiederholte Behandlung von Pflanzen in der VI. Periode der Organogenese durchzuführen. Die gesamtdosis des Sterilisationsmittels beträgt 0,6 bis 20 kg/ha.

Alle erfindungsgemässen N-substituierten Maleaminsäuren, welche als Sterilisationsmittel zur Verwendung kommen, waren auf die Toxizität im Tierversuch geprüft. Die Prüfergebnisse haben ergeben, dass die angegebenen Verbindungen von schwacher oder mittlerer Toxizität sind. $LD_{50}$ beträgt bei N-(2-Dimethylaminoäthyl)maleaminsäure 2500 mg/kg Tiergewicht, bei N-(3-Dimethylaminopropyl)maleaminsäure über 10000 mg/kg, bei N-Äthylmaleaminsäure 2000 mg/kg, bei N-(2-Hydroxyäthyl)maleaminsäure 1500 mg/kg und bei N-Karbomoylmaleaminsäure 2000 mg/kg.

Die gametozide Aktivität der erfindungsgemässen Sterilisationsmittel war im Feldversuch in verschiedenen Bodenklimatischen Zonen mit Teilstücken von 10 $m^2$ Grösse in drei- bis viermaliger Wiederholung nachgewiesen. Jedes Sterilisationsmittel wurde mindestens 5 Jahre lang geprüft.

Die Entwicklung der Perioden der Organogenese wird zytologischüberwacht. Die Behandlung von Pflanzen mit dem Sterilisationsmittel erfolgt am Anfang der fünften Periode der Organogenese nach Kupermann.

Mit dem Ahrenschiebe verwirklicht man die Isolierung von Hauptähren und anderen Stockwerken in Pergamentbeuteln. Bei Weizen und Tritikale werden Einzelisolatoren verwendet. Bei Roggen schliesst man je Ähre 5 bis 7 verschiedene nebeneinander befindliche Pflanzen unter einen gemeinsamen Isolator ein. Bei Hirse wird jede Rispe getrennt isoliert. Der Sterilitätsprozentsatz (X) für Weizen, Roggen, Tritikale und Hirse wird nach folgender Formel

$$x = \left[ I - \frac{\text{Anzahl der in einem Isolator befruchteten Samen von behandelten Pflanzen}}{\text{Anzahl der in einem Isolator befruchteten Samen von unbehandelten Kontrollpflanzen}} \right] x100\%$$

ermittelt.

Die Kornzahl in nicht isolierten ähren von Kontrollpflanzen wird bedingt für 100% Ansetzen bei freier Bestäubung angenommen.

Um zuverlässige Angaben zu erhalten, verwendet man 20 bis 25 Isolatoren jeder Wiederholung für Weisen und Tritikale, 10 bis 15 Gruppenisolatoren jeder Wiederholung für Roggen und Hirse.

Zur Kontrolle der chemischen Sterilisation des Sonnenblumenpollens werden für jede Verbindung 45 behandelte Pflanzen jeder Wiederholung benutzt, wobei 15 Pflanzen von denen zwecks Selbstbestäurung des Blütenkörbchens isoliert werden, 15 andere Pflanzen mit einem Pollengemisch, gesammelt von 20 bis 25 behandelten isolierten Körbchen, bestäubt werden und 15 Pflanzen für freie Bestäubeung gelassen werden, damit das Ansetzen von Achänen mit dem Pollen der Vaterform kontrolliert werden kann.

Man beurteilt die Pollensterilität von Pflanzen der Sonnenblume nach der Pollenfertilität und -keimfähigkeit, nach den morphologischen Besonderheiten von Spermien und nach der Fähigkeit von Achänen zum Ansetzen bei der Bestäubung der behandelten isolierten Pflanzen mit dem Pollen der unbehandelten väterlichen Form. Die Lebensfähigkeit der Eizelle wird nach der Samenbildung von behandelten Pflanzen bei freier Bestäubung der väterlichen Form ermittelt.

Es ist wünschenswert, die Behandlung von Pflanzen bei heiterem windstillem Wetter durchzuführen.

N-substituierte Maleaminsäuren sind bekannte Verbindungen. Sie werden nach der bekannten Technologie beispielsweise durch Umsetzung des Maleinsäureannydrids und des entsprechenden Amins hergestellt.

Zu einem besseren Verständnis der vorliegenden Erfindung werden folgende konkrete Ausführungsbeispiele angeführt.

Beispiel 1

Pflanzen des Winterweizens Sorte Mironovskaya 808 werden in der V. Periode der Organogenese durch Zerstäubung einer 2%igen wässrigen Emulsion der N-(2-Dimethylaminoäthyl)-maleaminsäure mit Hilfe einer Rückspritze behandelt. Als Emulgierungsmittel wird 0,1 Masse% Kalziumalkylbenzolsulfonat mit 12 bis 14 Kohlenstoffatomen hin-

zugefügt. Als Adjuvans führt man in die Emulsion 0,01 Masse% Dimethylsulfoxid ein. Der Verbrauch an Präparat beträgt 20 kg/ha. Als Kontrolle dienen Pflanzen, behandelt mit einem Verdünner ohne Sterilisationsmittel. Die Ergebnisse sind in der Tabelle 1 angeführt.

Beispiele 2 bis 5

Man verfährt analog zu dem in Beispiel 1 beschriebenen. Als Sterilisationsmittel verwendet man eine 2%ige wässrige Emulsion von N-(3-Dimethylaminopropyl)-maleaminsäure, N-Äthylmaleaminsäure, N-(2-Hydroxyäthyl)-maleaminsäure, N-Karbamoylmaleaminsäure. Die Prüfergebnisse sind in der Tabelle 1 dargestellt.

Die ähnlichen Ergebnisse sind bei der Behandlung von Weizen Sorte Mironowskaya 808 in der VI. Periode der Organogenese erhalten.

Tabelle 1

| Lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1. | Kontrolle | 42,1 | 0,0 | 42,6 | 100,0 |
| 2. | Beispiel 1 | 0,1 | 99,8 | 38,3 | 89,9 |
| 3. | Beispiel 2 | 0,1 | 99,8 | 41,5 | 97,4 |
| 4. | Beispiel 3 | 0,2 | 99,5 | 40,7 | 95,5 |
| 5. | Beispiel 4 | 0,3 | 99,3 | 39,8 | 93,4 |
| 6. | Beispiel 5 | 0,0 | 100,0 | 40,0 | 93,9 |

Beispiele 6 bis 10

Pflanzen des Winterweizens Sorte Bezostaya 1 werden in der V. Periode der Organogenese durch Zerstäubung einer 2%igen wässrigen Emulsion von N-(2-Dimethylaminoäthyl)-maleaminsäure, N-(3-Dimethylaminopropyl)-maleaminsäure, N-Äthylmaleaminsäure, N-(2-Hydroxyäthyl)-maleaminsäure, N-Karbamoylmaleaminsäure mit Hilfe deiner Rückspritze

behandelt. Die Emulsion enthält 0,1 Masse% Kalziumalkylbenzolsulfonat mit 12 bis 14 Kohlenstoffatomen. Als Adjuvans führt man in die Emulsion 0,01 Masse% Tetrahydrofuran ein.

Der Verbrauch an Präparat beträgt 16 kg/ha. Als Kontrolle dienen Pflanzen, behandelt mit einem Verdünner ohne Sterilisationsmitteln.

Die Prüfergebnisse sind in der Tabelle 2 dargestellt. Die ähnlichen Ergebnisse sind bei der Behandlung des Winterweizens Sorte Bezostaya 1 in der VI.Periode der Organogenese erhalten.

Tabelle 2

| lfd.Beispiel Nr. | Anzahl von Körnern der Ähre im Isolator | Prozentsatz der Sterilität | Anzahl von Körnern der Ähre bei freier Bestäubung | Prozentsatz des Ansetzens von Körnern bei breier Bestäubung |
|---|---|---|---|---|
| 1. Kontrolle | 31,7 | 0,0 | 42,9 | 100,0 |
| 2. Beispiel 6 | 0,0 | 100,0 | 39,7 | 92,5 |
| 3. Beispiel 7 | 0,0 | 100,0 | 40,2 | 93,7 |
| 4. Beispiel 8 | 0,2 | 99,4 | 42,1 | 98,1 |
| 5. Beispiel 9 | 0,0 | 100,0 | 37,1 | 86,5 |
| 6. Beispiel 10 | 0,7 | 97,8 | 41,8 | 97,4 |

Beispiele 11 bis 15

Pflanzen des Sommerweizens Sorte Moskovskaya 35 werden in V. Periode der Organogenese (nach Kupermann) mit einer 1%igen wässrigen Emulsion von N-(2-Dimethylaminoäthyl)-maleaminsäure, N-(3-Dimethylaminopropyl)-maleaminsäure, N-Äthylmaleaminsäure, N-(2-Hydroxyäthyl) maleaminsäure bzw. N-Karbamoylmaleaminsäure behandelt. Die Emulsion enthält 0,5 Masse% Kalziumalkylbenzolsulfonat mit 12 bis 14 Kohlenstoffatomen als Emulgierungsmittel und 0,01 Masse% Dimethylformamid als Adjuvans. Der Verbrauch an Präparat beträgt 10 kg/ha. Als Kontrolle dienen Pflanzen, behandelt mit einem Verdünner ohne Sterilisationsmittel.

Die Prüfergebnisse sind in der Tabelle 3 dargestellt. Die ähnlichen Ergebnisse sind bei der Behandlung des Winterweizens Sorte Moskovskaya 35 in der VI. Periode der Organogenese erhalten.

Tabelle 3

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1. | Kontrolle | 27,1 | 0,0 | 27,5 | 100,0 |
| 2. | Beispiel 11 | 0,2 | 99,3 | 26,8 | 97,4 |
| 3. | Beispiel 12 | 0,3 | 98,9 | 27,0 | 98,2 |
| 4. | Beispiel 13 | 0,4 | 98,5 | 26,7 | 97,1 |
| 5. | Beispiel 14 | 0,0 | 100,0 | 27,0 | 98,2 |
| 6. | Beispiel 15 | 0,0 | 100,0 | 27,2 | 98,9 |

Beispiele 16 bis 20

Pflanzen des Sommerweizens Sorte Botanicheskaya 4 werden in der V. Periode der Organogenese (nach Kupermann) mit einer 1%igen wässrigen Emulsion von N-(2-Dimethylaminoäthyl)-maleaminsäure, N-(3-Dimethylaminopropyl)-maleaminsäure, N-Äthylmaleaminsäure, N-(2-Hydroxyäthyl)-maleaminsäure bzw. N-Karbamoylmaleaminsäure behandelt. Die Emulsion enthält 0,5 Masse% Kalziumalkylbenzolsulfonat mit 12 bis 14 Kohlenstoffatomen und 0,01 Masse% Dimethylsulfoxid als Adjuvans. Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle 4 dargestellt. Die ähnlichen Ergebnisse sind bei der Behandlung des Sommerweizens Sorte Botanicheskaya 4 in der VI. Periode der Organogenese erhalten.

Tabelle 4

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1. | Kontrolle | 28,2 | 0,0 | 30,1 | 100,0 |
| 2. | Beispiel 16 | 0,7 | 97,5 | 29,8 | 99,0 |
| 3. | Beispiel 17 | 0,1 | 99,7 | 27,7 | 92,0 |
| 4. | Beispiel 18 | 0,0 | 100,0 | 28,2 | 93,7 |
| 5. | Beispiel 19 | 0,0 | 100,0 | 28,7 | 95,3 |
| 6. | Beispiel 20 | 0,0 | 100,0 | 27,1 | 90,0 |

Beispiel 21 bis 25

Pflanzen von tetraploidem Roggen Sorte Belta werden in der V. Periode der Organogenese (nach Kupermann) mit einer 1%igen wässrigen Emulsion von N-(2-Dimethylamino-äthyl)maleaminsäure, N-(3-Dimethylaminopropyl)maleaminsäure, N-Äthylmaleaminsäure, N-(2-Hydroxyäthyl)maleaminsäure bzw. Karbamoylmaleaminsäure behandelt. Die Emulsion enthält 0,5 Masse% Kalziumalkylbenzolsulfonat mit 12 bis 14 Kohlenstoffatomen und 0,01 Masse% Tetrahydrofuran. Der Verbrauch an Präparat beträgt 10 kg/ha. Die Prüfergebnisse sind in der Tabelle 5 dargestellt. Die ähnlichen Ergebnisse sind bei der Behandlung von tetraploidem Roggen Sorte Belta in der VI. Periode der Organogenese erhalten.

Tabelle 5

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | 2 | 3 | 4 | 5 | 6 |
| 1. | Kontrolle | 50,6 | 0,0 | 54,8 | 100,0 |

Fortsetzung der Tabelle 5

| 1 | 2 | 3 | 4 | 5 | 6 |
|---|---|---|---|---|---|
| 2. | Beispiel 21 | 0,0 | 100,0 | 48,2 | 88,2 |
| 3. | Beispiel 22 | 0,0 | 100,0 | 47,7 | 87,0 |
| 4. | Beispiel 23 | 0,3 | 99,4 | 52,3 | 95,4 |
| 5. | Beispiel 24 | 0,2 | 99,6 | 51,6 | 94,2 |
| 6. | Beispiel 25 | 0,0 | 100,0 | 47,8 | 87,2 |

Beispiel 26 bis 28

Pflanzen von tetraploidem Roggen Sorte Ukrainskaya tetra werden in der V. Periode der Organogenese (nach Kupermann) mit einer 1%igen wässrigen Emulsion von N-(2-Dimethylaminoäthyl)maleaminsäure, N-(3-Dimethylaminopropul)maleaminsäure bzw. N-Karbamoylmaleaminsäure behandelt. Die Emulsion enthält 0,1 Masse% Kaliumalkylbenzolsulfonat mit 12 bis 14 Kohlenstoffatomen und 0,01 Masse% Dodezylsulfat. Der Verbrauch an Präparat beträgt 6 kg/ha. Als Kontrolle dienen Pflanzen, behandelt mit einem Verdünner ohne Sterilisationsmittel. Die Prüfergebnisse sind in der Tabelle 6 dargestellt. Die ähnlichen Ergebnisse sind bei der Behandlung von tetraploidem Roggen Ukrainskaya in der VI. Periode der Organogenese erhalten.

Tabelle 6

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | 2 | 3 | 4 | 5 | 6 |
| 1. | Kontrolle | 32,6 | 0,0 | 44,8 | 100,0 |
| 2. | Beispiel 26 | 0,0 | 100,0 | 40,1 | 89,5 |
| 3. | Beispiel 27 | 0,0 | 100,0 | 42,6 | 95,1 |
| 4. | Beispiel 28 | 0,2 | 99,4 | 44,0 | 98,2 |

Beispiel 29 bis 33

Pflanzen von diploidem Roggen Sorte Voskhod 2 werden in der V. Periode der Organogenese (nach Kupermann) mit einer 1%igen wässrigen Emulsion von N-(2-Dimethylaminoäthyl)-maleaminsäure, N-(3-Dimethylaminopropyl)-maleaminsäure, N-Äthylmaleaminsäure N-(2-Hydroxyäthyl) maleaminsäure, N-Karbamoylmaleaminsäure behandelt. Die Emulsion enthält 0,1 Masse% Kalziumalkylbenzolsulfonat und 0,01 Masse% Dimethylformamid. Der Verbrauch an Präparat beträgt 10 kg/ha. Als Kontrolle dienen Pflanzen, behandelt mit einem Lösungsmittel ohne Sterilisationsmittel. Die Prüfergebnisse sind in der Tabelle 7 dargestellt. Die ähnlichen Ergebnisse sind bei der Behandlung von diploidem Roggen Sorte Voskhod 2 in der VI. Periode der Organogenese erhalten.

Tabelle 7

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1. | Kontrolle | 49,2 | 0,0 | 55,2 | 100,0 |
| 2. | Beispiel 29 | 0,0 | 100,0 | 51,2 | 92,7 |
| 3. | Beispiel 30 | 0,0 | 100,0 | 48,0 | 87,0 |
| 4. | Beispiel 31 | 0,0 | 100,0 | 53,0 | 96,0 |
| 5. | Beispiel 32 | 0,8 | 98,4 | 52,2 | 94,6 |
| 6. | Beispiel 33 | 0,9 | 98,2 | 51,7 | 93,7 |

Beispiele 34 bis 38

Pflanzen von diploidem Roggen Sorte Chulpan werden in der V. Periode der Organogenese (nach Kupermann) mit einer 1%igen wässrigen Emulsion von N-(2-Dimethylaminoähtyl)-maleaminsäure, N-(3-Dimethylaminopropyl)-maleaminsäure, N-Äthylmaleaminsäure, N-(2-Hydroxyäthyl)maleaminsäure, N-Karbamoylmaleaminsäure behandelt. Die Emulsion enthält 0,01 Masse% Tetranydrofuran und 0,1 Masse% Kalziumalkylbenzolsulfonat mit 12 bis 14 Kohlenstoffatomen. Der Verbrauch an Präparat beträgt 8 kg/ha. Als Kontrolle

dienen Pflanzen, behandelt mit einem Verdünner ohne Sterilisationsmittel.

Die Prüfergebnisse sind in der Tabelle 8 dargestellt. Die ähnlichen Ergebnisse sind bei der Behandlung von diploidem Roggen Sorte Chulpan in der VI. Periode der Organogenese erhalten.

Tabelle 8

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | 2 | 3 | 4 | 5 | 6 |
| 1. | Kontrolle | 51,2 | 0,0 | 56,8 | 100,0 |
| 2. | Beispiel 34 | 0,2 | 99,6 | 50,2 | 88,4 |
| 3. | Beispiel 35 | 0,0 | 100,0 | 51,6 | 90,8 |
| 4. | Beispiel 36 | 0,3 | 99,4 | 49,8 | 87,7 |
| 5. | Beispiel 37 | 0,1 | 99,8 | 50,1 | 88,2 |
| 6. | Beispiel 38 | 0,0 | 100,0 | 48,7 | 85,7 |

Beispiele 39 bis 43

Pflanzen von diploidem Roggen Sorte Talovskaya 12 werden in der V. Periode der Organogenese (nach Kupermann) mit einer 1%igen wässrigen Emulsion von N-(2-Dimethylaminoäthyl)-maleaminsäure, N-(3-Dimethylaminopropyl)-maleaminsäure, N-Äthylmaleaminsäure, N-(2-Hydroxyäthyl)maleaminsäure, N-Karbamoylmaleaminsäure behandelt. Die Emulsion enthält 0,01 Masse% Dodezylsulfat und 0,1 Masse% Kalziumalkylbenzolsulfonat mit 12 bis 14 Kohlenstoffatomen. Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle 9 dargestellt. Die ähnlichen Ergebnisse sind bei der Behandlung von diploidem Roggen Sorte Talovskaya 12 in der VI. Periode der Organogenese erhalten.

Tabelle 9

&

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1. | Kontrolle | 40,2 | 0,0 | 56,2 | 100,0 |
| 2. | Beispiel 39 | 0,2 | 99,5 | 51,2 | 91,1 |
| 3. | Beispiel 40 | 0,0 | 100,0 | 48,0 | 85,4 |
| 4. | Beispiel 41 | 0,0 | 100,0 | 50,1 | 889,1 |
| 5. | Beispiel 42 | 0,3 | 99,3 | 53,2 | 94,7 |
| 6. | Beispiel 43 | 0,0 | 100,0 | 48,9 | 87,0 |

Beispiel 44 bis 46

Pflanzen von Tritikale Sorte Amfidiploid 206 werden in der V. Periode der Organogenese (nach Kupermann) mit einer 2%igen wässrigen Emulsion von N-(3-Dimethylaminopropyl)-maleaminsäure, N-Äthylmaleaminsäure, N-Karbamoylmaleaminsäure behandelt.

Die Emulsion enthält 0,01 Masse% Dimethylsulfoxid und 0,1 Masse% Kalziumalkylbenzolsulfonat mit 12 bis 14 Kohlenstoffatomen.

Der Verbrauch an Präparat beträgt 12 kg/ha. Als Kontrolle dienen Pflanzen, behandelt mit einem Verdünner ohne Sterilisationsmittel.

Die Prüfergebnisse sind in der Tabelle 10 dargestellt. Die ähnlichen Ergebnisse sind bei der Behandlung von Tritikale Sorte Amfidiploid 206 in der VI. Periode der Organogenese erhalten.

Tabelle 10

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | 2 | 3 | 4 | 5 | 6 |

Fortsetzung der Tabelle 10

| 1 | 2 | 3 | 4 | 5 | 6 |
|---|---|---|---|---|---|
| 1. | Kontrolle | 18,4 | 0,0 | 25,2 | 100,0 |
| 2. | Beispiel 44 | 0,1 | 99,0 | 21,7 | 86,1 |
| 3. | Beispiel 45 | 0,4 | 97,8 | 20,5 | 81,3 |
| 4. | Beispiel 46 | 0,0 | 100,0 | 21,1 | 83,7 |

Beispiele 47 und 48

Pflanzen von Tritikale Sorte Prag 109 werden in der V.Periode der Organogenese (nach Kupermann) mit einer 2%igen wässrigen Emulsion von N-(3-Dimethylaminopropyl) maleaminsäure, N-Karbamoylmaleaminsäure behandelt. Die Emulsion enthält 0,01 Masse% Tetrahydrofuran und 0,1 Masse% Tetrahydrofuran und 0,1 Masse% Kalziumalkylbenzolsulfonat mit 12 bis 14 Kohlensotffatomen. Der Verbrauch an Präparat beträgt 12 kg/ha. Als Kontrolle dienen Pflanzen, behandelt mit einem Verdünner ohne Sterilisationsmittel.

Die Prüfergebnisse sind in der Tabelle 11 dargestellt. Die ähnlichen Ergebnisse sind bei der Behandlung von Tritikale Sorte Prag 109 in der VI. Periode der Organogenese erhalten.

Tabelle 11

| lfd. Nr. | Beispiel | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1. | Kontrolle | 41,3 | 0,0 | 45,8 | 100,0 |
| 2. | Beispiel 47 | 0,0 | 100,0 | 40,3 | 88,0 |
| 3. | Beispiel 48 | 0,0 | 100,0 | 39,6 | 86,5 |

Beispiele 49 bis 53

Pflanzen der Hirse Sorte Mironovskoe 94 werden in der V. Periode der Organogenese (nach Kupermann) mit einer 1%igen wässrigen Emulsion von N-(2-Dimethylaminoäthyl)maleaminsäure,

N-(3-Dimethylaminopropyl)maleaminsäure, N-Äthylmaleaminsäure, N-(2-Hydroxyäthyl)maleaminsäure, N-Karbamoylmaleaminsäure behandelt. Die Emulsion enthält 0,01 Masse% Dimethylsulfoxid und 0,1 Masse% Kalziumalkylbenzolsulfonat mit 12 bis 14 Kohlenstoffatomen. Der Verbrauch an Präparat beträgt 8 kg/ha. Als Kontrolle dienen Pflanzen, behandelt mit einem Verdünner ohne Sterilisationsmittel. Die Prüfergebnisse sind in der Tabelle 12 dargestellt. Die ähnlichen Ergebnisse sind bei der Behandlung von Hirse Sorte Mironovskoe 94 in der VI. Periode der Organogenese erhalten.

Tabelle 12

| lfd. Nr. | Beispiel | Anzahl von Körnern der Rispe im Isolator | Prozentsatz der Sterilität | Anzahl von Körnern der Rispe bei freier Bestäubung | Prozentsatz des Ansetzens von Körnern bei freier Bestäubung |
|---|---|---|---|---|---|
| 1. | Kontrolle | 184,0 | 0,0 | 227,3 | 100,0 |
| 2. | Beispiel 49 | 0,0 | 100,0 | 224,8 | 98,9 |
| 3. | Beispiel 50 | 0,0 | 100,0 | 214,5 | 94,4 |
| 4. | Beispiel 51 | 0,0 | 100,0 | 200,8 | 88,3 |
| 5. | Beispiel 52 | 0,0 | 100,0 | 215,0 | 94,6 |
| 6. | Beispiel 53 | 0,0 | 100,0 | 198,2 | 87,2 |

Beispiele 54 bis 58

Pflanzen der Hirse Sorte K-9693 Kormovoe 1 werden in der V. Periode der Organogenese (nach Kupermann) mit einer 1%igen wässrigen Emulsion von N-(2-Dimethylaminoäthyl) maleaminsäure, N-(3-Dimethylaminopropyl)maleaminsäure, N-Äthylmaleaminsäure, N-Karbamoylmaleaminsäure behandelt. Die Emulsion enthält 0,01 Masse% Dimethylformamid und 0,1 Masse% Kalziumalkylbenzolsulfonat mit 12 bis 14 Kohlenstoffatomen.

Der Verbrauch an Präparat beträgt 6 kg/ha. Als Kontrolle dienen Pflanzen, behandelt mit einem Verdünner ohne Sterilisationsmittel. Die Prüfergebnisse sind in der Tabelle 13 dargestellt. Die ähnlichen Ergebnisse sind bei der Behandlung der Hirse Sorte K-9693 Kormovoe 1 in der VI. Periode der Organogenese erhalten.

Tabelle 13

| lfd. Beispiel Nr. | Anzahl von Körnern der Rispe im Isolator | Prozentsatz der Sterilität | Anzahl von Körnern der Rispe bei freier Bestäubung | Prozentsatz des Ansetzens von Körnern bei freier Bestäubung |
|---|---|---|---|---|
| 1. Kontrolle | 125,0 | 0,0 | 146,7 | 100,0 |
| 2. Beispiel 54 | 0,0 | 100,0 | 124,2 | 84,7 |
| 3. Beispiel 55 | 0,0 | 100,0 | 100,8 | 68,7 |
| 4. Beispiel 56 | 0,0 | 100,0 | 114,7 | 78,2 |
| 5. Beispiel 57 | 0,0 | 100,0 | 127,2 | 86,7 |
| 6. Beispiel 58 | 0,0 | 100,0 | 133,6 | 91,1 |

Beispiele 59 bis 62

Pflanzen der Sonneblume Sorte Peredovik und Linie BK-119 werden in der V. Periode der Organogenese (nach Kupermann) mit einer 0,5%igen wässrigen Emulsion der N'-Karbamoylmaleaminsäure behandelt. Die Emulsion enthält 0,01 Masse% Dimethylsulfoxid und 0,1 Masse% Kalziumalkylbenzolsulfonat mit 12 bis 14 Kohlenstoffatomen. Der Verbrauch an Präparat beträgt 3 kg/ha. Die gleichen Pflanzen werden mit einer 0,1masseprozentigen wässrigen Emulsion der N-(3-Dimethylaminopropyl)-maleaminsäure behandelt. Im letzten Falle enthält die Emulsion 0,01 Masse% Dodezylsulfat und 0,1 Masse% Kalziumalkylbenolsulfonat mit 12 bis 14 Kohlensotffatomen. Der Verbrauch an Präparat beträgt 1 kg/ha. Als Kontrolle dienen Pflanzen, behandelt mit einem Verdünner ohne Sterilisationsmittel. Die Prüfergenisse sind in der Tabelle 14 dargestellt. Die ähnlichen Ergebnisse sind bei der Behandlung der Sonnenblume der angegebenen Sorten in der VI. Periode der Organogenese erhalten.

Tabelle 14

| lfd. Beispiel Nr. | Prozentsatz der Sterilität | Ansetzen von Achänen bei freier Bestäubung in % | Masse von 1000 Achänen in g | Ölgehalt von Achänen in % | Wachstumsenergie in % |
|---|---|---|---|---|---|
| | Sorte Peredovik | | | | |
| 1. Kontrolle | 0,2 | 85,0 | 84,0 | 54,7 | 100,0 |
| 2. Beispiel 59 | 100,0 | 81,7 | 83,7 | 54,4 | 100,0 |
| 3. Beispiel 60 | 100,0 | 84,9 | 83,3 | 54,0 | 100,0 |
| | Linie BK-119 | | | | |
| 1. Kontrolle | 2,0 | 85,0 | 60,0 | 51,0 | 100,0 |
| 2. Beispiel 61 | 100,0 | 82,5 | 58,8 | 50,8 | 100,0 |
| 3. Beispiel 64 | 100,0 | 80,4 | 59,6 | 51,0 | 100,0 |

Im angemeldeten Verfahren ist zweckmäßigerweise N-substituierte Malenminsäuren in Form einer 0,1- bis 2%igen wäßrigen Emulsion zu verwenden. Als Pflanzen, die mit dem genannten Sterilisationsmittel behandelt werden, sind vorzugsweise Graspflanzen und Sonnenblume anzuwenden.

## Industrielle Anwendbarkeit

Das erfindungsgemäße Verfahren findet seine Anwendung in der Selektion und im Samenbau, bei der Herstellung von nochproduktiven Sorten und Hybriden der landwirtschaftlichen Kulturen.

PATENTANSPRÜCHE

1. Verfahren zur Sterilisation der Staubbeutel von Pflanzen durch ihre Behandlung mit einem Sterilisationsmittel in Kombination mit einem Verdünner in der fünften und/oder sechsten Periode der Organogenese, dadurch gekennzeichnet, dass als Sterilisationsmittel N-substituierte Maleaminsäuren der allgemeinen Formel $RNHCOCH \rightarrow CHCO_2H$ dienen, worin R $(CH_3)_2NCH_2CH_2-$; $(CH_3)_2NCH_2CH_2CH_2-$; $C_2H_5-$; $HOC_2H_4-$; $NH_2CO$ bedeutet.

2. Verfahren nach Anspruch 1, dadurch g e k e n n z e i c h n e t, dass die angegebenen N-substituierten Maleaminsäuren in Kombination mit einem Verdünner als eine 0,1- bis 2%ige wässrige Emulsion verwendet werden.

3. Verfahren nach Anspruch 1, 2, dadurch g e k e n n z e i c h n e t, dass als Pflanzen, die mit dem Sterilisationsmittel zu behandeln sind, Graspflanzen und Sonnenblume dienen.

4. Verfahren nach Anspruch 1 ubis 3, dadurch g e k e n n z e i c h n e t, dass zwecks Erzielung eines hohen Sterilisationsgrades von Staubbeuteln unter ungünstigen Klimabedingungen die wiederholte Behandlung von Pflanzen mit dem Sterilisationsmittel in der fünften und/oder sechsten Periode der Organogenese erfolgt.

# INTERNATIONAL SEARCH REPORT

International Application No PCT/SU 88/00054

**I. CLASSIFICATION OF SUBJECT MATTER** (if several classification symbols apply, indicate all) [6]

According to International Patent Classification (IPC) or to both National Classification and IPC

IPC[4] A01N 37/30

**II. FIELDS SEARCHED**

Minimum Documentation Searched [7]

| Classification System | Classification Symbols |
|---|---|
| IPC[4] | A01N 37/06,37/20,37/30,37/44,<br>A01H 1/04 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | SU, A1, 950248 (Institut bioorganicheskoi khimii im M.M. Shemyakina AN SSSR et al.) 15 August 1982 (15.08.82) | 1,3 |
| A | SU, A1, 762812 (Leningradsky tekhnologichesky ordena Trudovogo Krasnogo Znameni i ordena Oktyabrskoi Revolyutsii institut im Lensoveta et al.) 15 September 1980 (15.09.80) | 1-3 |
| A | SU, A3, 931087 (Rom and Haas Company) 23 May 1982 (23.05.82) | 1-4 |
| A | SU, A3, 965337 (Shell International Research Maatschappij B.V.) 07 October 1982 (07.10.82) | 1-4 |
| A | FR, A1, 2389324 (IMPERIAL CHEMICAL INDUSTRIES LIMITED) 01 December 1978 (01.12.78) see pages 1,3,13-16,17 | 1 |
| A | L. Dzh. Nikell "Regulyatory rosta rasteny" 1984, Kolos (Moscow) pages 30,31 | 1 |

----------------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 11 October 1988 (11.10.88) | 16 December 1988 (16.12.88) |
| **International Searching Authority** | **Signature of Authorized Officer** |
| ISA/SU | |